# EUROPÄISCHE PATENTSCHRIFT

(11) **EP 3 943 365 B1**
(45) Veröffentlichungstag und Bekanntmachung des Hinweises auf die Patenterteilung: **18.06.2025**
(21) Anmeldenummer: 21187023.3
(22) Anmeldetag: 21.07.2021
(51) Int. Cl.: B62B 3/02, B62B 5/02, B62B 9/02

(54) **FAHRWERK FÜR EINEN SCHUBWAGEN UND SCHUBWAGEN**
RUNNING GEAR FOR A TROLLEY AND TROLLEY
CHÂSSIS POUR UN CHARIOT ET CHARIOT

(30) Priorität: 21.07.2020 DE 102020119267
(43) Veröffentlichungstag der Anmeldung: 26.01.2022
(73) Patentinhaber: Sant'Unione, Clara, 81667 München (DE)
(72) Erfinder: Keller, Veronica, 81667 München (DE)
(74) Vertreter: MFG Patentanwälte Meyer-Wildhagen Meggle-Freund Gerhard PartG mbB

(56) Entgegenhaltungen:
- CN-A- 108 327 768
- DE-A1- 102016 013 516
- DE-B3- 102015 210 613
- US-B1- 8 231 131

## Beschreibung

### TECHNISCHES GEBIET

Die vorliegende Erfindung bezieht sich allgemein und insbesondere auf ein Fahrwerk für einen Schubwagen und einen Schubwagen.

### TECHNISCHER HINTERGRUND

Es sind allgemein Schubwägen bekannt, wie zum Beispiel Einkaufswägen, Kinderwägen, Rolluntersätze (bspw. für Mülltonnen), und dergleichen.

Um mit solchen Schubwägen Treppen bzw. Stufen überwinden zu können, gibt es verschiedene Lösungsansätze. Beispielsweise ist bei Einkaufswägen bekannt, dass Vorder- und Hinterräder unterschiedlich groß sein können. Wenn zum Beispiel die Hinterräder größer sind als die Vorderräder, können die Vorderräder leichter angehoben werden, als bei Wägen mit gleich großen Rädern.

Des Weiteren ist von Sackkarren bekannt, dass sie zum Überwinden von Treppenstufen mehrere Räder an einer Seite einer Achse haben können, die drehbar um einen Mittelpunkt gelagert sind. Beispielsweise beschreibt die Patentschrift DE 10 2015 210 613 B3 einen Transportwagen zum Transport schwerer Lasten über Hindernisse, wobei die Räder des Transportwagens klappbar gelagert sind.

Ferner beschreibt die Offenlegungsschrift DE 10 2016 013 516 A1 einen Transportwagen zum Einsatz auf Schiffen, der Süllen überwinden können soll und sich in engen Gängen manövrieren lässt. Eine Sackkarre zum Hoch- und Runtertragen schwerer Gewichte auf Treppen ist aus der Patentschrift US 8.231,131 B1 bekannt.

Aufgabe der Erfindung ist es, ein verbessertes Fahrwerk für einen Schubwagen sowie einen Schubwagen zur Verfügung zu stellen.

### ZUSAMMENFASSUNG

Die vorliegende Erfindung betrifft ein Fahrwerk für einen Schubwagen gemäß dem unabhängigen Anspruch 1. Weitere Merkmale ergeben sich aus den abhängigen Ansprüchen.

### KURZBESCHREIBUNG DER ZEICHNUNG

Ausführungsformen werden nun beispielhaft und unter Bezugnahme auf die beigefügte Zeichnung beschreiben, in der:
Fig. 1 eine erste Ausführungsform eines Fahrwerks für einen Schubwagen gemäß der vorliegenden Offenbarung veranschaulicht;
Fig. 2 das Fahrwerk von Fig. 1 darstellt, in welchem eine alternative Führung zwischen der Vorderachse und der Hinterachse vorgesehen ist;
Fig. 3 ein weiteres Ausführungsbeispiel eines Fahrwerks gemäß der vorliegenden Offenbarung veranschaulicht;
Fig. 4 ein weiteres Ausführungsbeispiel eines Fahrwerks gemäß der vorliegenden Offenbarung zeigt;
Fig, 5 ein weiteres Ausführungsbeispiel eines Fahrwerks gemäß der vorliegenden Offenbarung zeigt;
Fig. 6 beispielhaft zeigt, wie ein Schubwagen gemäß der vorliegenden Offenbarung verwendet werden kann;
Fig. 7 ein weiteres Ausführungsbeispiel eines Fahrwerks gemäß der vorliegenden Offenbarung zeigt;
Fig. 8 ein weiteres Ausführungsbeispiel eines Schubwagens gemäß der vorliegenden Offenbarung zeigt und eine beispielhafte Verwendung des Schubwagens; und
Fig. 9 ein weiteres Ausführungsbeispiel eines Fahrwerks für einen Schubwagen gemäß der vorliegenden Offenbarung zeigt.

Als erfindungsgemäß sind dabei aber nur diejenigen Ausführungsbeispiele anzusehen, welche unter die Definition laut Anspruch 1 fallen.

### BESCHREIBUNG VON AUSFÜHRUNGSFORMEN

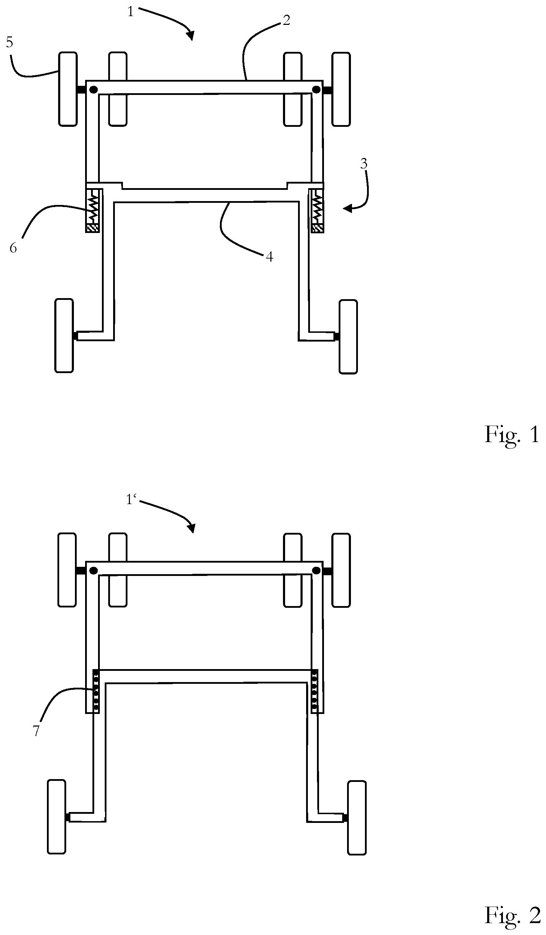

Vor einer detaillierten Beschreibung der Ausführungsform unter Bezugnahme auf Fig. 1 folgen zunächst allgemeine Erläuterungen zu den Ausführungsformen.

Wie bereits beschrieben, sind Schubwägen generell bekannt. Möglicherweise ist es jedoch umständlich, mit bekannten Schubwägen eine oder mehrere Stufen (einer Treppe) zu überwinden, da bspw. ein Radabstand nicht einer Länge von mehreren Treppenstufen entspricht, oder die Räder zu groß sind, oder dergleichen.

Darüber hinaus kann es bei Wägen mit unterschiedlich großen Rädern möglicherweise problematisch werden, die Hinterräder bzw. die Hinterachse anzuheben, um ein Hindernis zu überwinden. Generell sind solche bekannten Vorrichtungen möglicherweise nicht dazu geeignet, einzelne Stufen zu überwinden, sondern, wenn überhaupt, nur eine (kurze) Treppe als Ganzes.

Deshalb betreffen manche nicht erfindungsgemäße Ausführungsbeispiele ein Fahrwerk für einen Schubwagen, umfassend:
eine Hinterachse und eine Vorderachse, die in Schubrichtung hintereinander angeordnet sind, wobei ein Achsabstand durch einen elastischen Spannmechanismus veränderbar ist, wobei der Achsabstand durch einen Aufbau einer Zugspannung in dem elastischen Spannmechanismus durch Verstellen der Vorderachse und/oder der Hinterachse verkleinerbar ist.

Ein Schubwagen gemäß der vorliegenden Offenbarung kann jede Art von Wagen sein, die durch Ausüben einer Schubkraft in die Schubrichtung (also durch Drücken) zur Fortbewegung geeignet sind. Somit kann ein offenbarungsgemäßer Schubwagen beispielsweise einen Kinderwagen, eine Sackkarre, einen Einkaufswagen, einen Handwagen und dergleichen umfassen.

Die Hinterachse und die Vorderachse können dabei derart gestaltet sein, dass sie beweglich sind oder dass sie eine Bewegung von Rädern zulassen, wobei die vorliegende Offenbarung nicht darauf beschränkt ist. Beispielsweise kann auch nur eine der Achsen einen solchen Mechanismus aufweisen.

Darüber hinaus können die Achsen auch verschiedene oder die gleichen Achsarten aufweisen, welche beispielsweise umfassen können: Feststehende Achse, umlaufende Achse, Achszapfen, Achsstummel, Vollachse, Hohlachse. Beispielsweise kann die Hinterachse mit einer feststehenden Achse realisiert sein, während die Vorderachse mit Achsstummeln realisiert ist, ohne die vorliegende Offenbarung darauf zu beschränken.

Die Hinterachse ist in manchen Ausführungsbeispielen fixiert, sodass nur die Vorderachse verstellbar ist, womit die Zugspannung aufgebaut werden kann. Damit ist jedoch nicht gemeint, dass Räder der Hinterachse nicht lenkbar gelagert sein dürfen, sondern, dass die Position der Achse nicht in die Schubrichtung veränderbar ist.

Es ist der Achsabstand, also der Abstand zwischen der Vorder- und der Hinterachse, veränderbar. Dies kann durch einen elastischen Spannmechanismus erreicht werden, mit dem die Position der Vorderachse relativ zur Hinterachse (oder umgekehrt) verändert werden kann.

Der elastische Spannmechanismus kann dabei beispielsweise an einem Unterboden des Schubwagens vorgesehen sein. Hierbei ist die Vorderachse durch den elastischen Spannmechanismus mit der Hinterachse verbunden.

Wenn in dem elastischen Spannmechanismus eine Zugspannung aufgebaut wird, bspw. durch einen Druck gegen die Vorderachse, kann dadurch der Achsabstand verkleinert werden, indem die Position der Vorderachse verändert wird, genauer gesagt, indem die Vorderachse in Richtung der Hinterachse verstellt wird.

Zum Verstellen der Vorderachse und/oder der Hinterachse ist es vorstellbar, dass diese beispielsweise mit einem Motor verstellt werden kann (bzw. können), entweder durch Aufbauen der Zugspannung durch den Motor direkt, oder durch direktes Verstellen der Vorderachse und/oder der Hinterachse, womit die Zugspannung aufgebaut wird.

In manchen Ausführungsbeispielen kann die Zugspannung aufgebaut werden, indem ein manueller Druck oder eine Kraft auf die Vorderachse entgegen der Schubrichtung ausgeübt wird. So kann zum Beispiel der Schubwagen gegen ein Hindernis, bspw. eine Treppenstufe, gedrückt werden, wodurch sich der Achsabstand verkleinert.

In manchen Ausführungsbeispielen ist der elastische Spannmechanismus dazu eingerichtet, den Achsabstand durch Abbau der Zugspannung zu vergrößern.

Wenn beispielsweise der manuelle Druck nachlässt, bspw. indem die Vorderachse über die Treppenstufe hinaus angehoben wird, bspw. indem der Schubwagen gekippt wird, kann die Zugspannung abgebaut werden, wodurch die Vorderachse in ihre ursprüngliche Position gebracht wird.

In manchen Ausführungsbeispielen enthält der elastische Spannmechanismus wenigstens ein Vorspannelement.

Das wenigstens eine Vorspannelement kann beispielsweise eine Feder, ein (elastisches) Band (oder eine Kombination), eine Gaszugfeder, eine hydraulische Feder, und/oder dergleichen umfassen.

In manchen Ausführungsbeispielen enthält der elastische Spannmechanismus wenigstens einen Dämpfer.

In dem Dämpfer kann beispielsweise durch eine Verminderung eines Innendrucks bei dem Verstellen der Vorderachse die notwendige Zugspannung aufgebaut werden.

Der wenigstens eine Dämpfer kann auch ein Teil einer Gleitvorrichtung sein, die es erlaubt, dass die Vorderachse mit geringem Aufwand verstellt werden kann.

Generell ist die vorliegende Offenbarung nicht darauf beschränkt, dass eine Zugspannung aufgebaut wird. **In** manchen Ausführungsbeispielen wird durch das Verstellen der Räder eine Druckspannung aufgebaut, bspw. indem ein elastischer Druckmechanismus statt eines elastischen Spannmechanismus vorgesehen ist.

Beispielsweise können steife Federn (oder nur eine steife Feder), bspw. in einer Führung vorgesehen sein, welche aus einer Ruhelage verkleinert werden, bei Verstellen der Vorderachse und/oder der Hinterachse, sodass diese eine Druckkraft aufbauen und so die Vorderachse und/oder die Hinterachse in ihre Grundposition zurückbringen können.

Es können in solchen Ausführungsbeispielen auch Dämpfer verwendet werden, die durch Verstellen der Vorderachse und/oder der Hinterachse einen Überdruck aufbauen und so eine Druckkraft aufgebaut wird.

In manchen Ausführungsbeispielen ist die Vorder- und/oder die Hinterachse durch einen Teleskopmechanismus verstellbar, sodass die Veränderung des Achsabstands auf einer Geraden erfolgt, während in manchen Ausführungsbeispielen die Verstellung der Vorder- und/oder der Hinterachse auf einer Kreisbahn erfolgt, bspw. mit einer Gleitkonstruktion.

In manchen Ausführungsbeispielen ist die Vorderachse mit der Hinterachse über eine Gleitschiene beweglich miteinander verbunden. In solch einer Gleitschiene kann der Spannmechanismus gemäß der vorliegenden Offenbarung als (wenigstens) eine Gaszugfeder implementiert sein, um die notwendige Zugspannung aufzubringen, um die Funktionsweise eines Schubwagens gemäß der vorliegenden Offenbarung bereitzustellen.

Zusätzlich oder alternativ kann in manchen Ausführungsbeispielen eine Dämpfung (bspw. in der Gleitschiene) vorgesehen sein, damit die Vorderachse nicht ruckartig nach vorne stößt und (ähnlich einer selbstschließenden Tür), langsam ausfahren kann.

Generell ist die vorliegende Offenbarung nicht darauf beschränkt, dass ein Schubwagen gemäß der vorliegenden Offenbarung geschoben wird, da er prinzipiell auch gezogen werden kann, wobei bei einem Ziehen die Hinterachse statt der Vorderachse verstellt werden kann, wenn nur eine Achse verstellbar ist, und so die Zugspannung aufgebaut wird.

Manche Ausführungsbeispiele betreffen einen Schubwagen, wie hierin beschrieben.

In manchen Ausführungsbeispielen weist der Schubwagen ferner auf: eine Transportvorrichtung, die mit dem Fahrwerk gekoppelt ist.

Die Transportvorrichtung kann derart vorgesehen sein, dass ein etwaiges Transportgut darin transportiert werden kann (bspw. Einkäufe im Falle eines Einkaufswagens, ein Kind im Falle eines Kinderwagens, und dergleichen). Generell kann die Transportvorrichtung aber auch derart gestaltet sein, dass sie flexibel für verschiedene Transportgüter verwendet werden kann.

Die Transportvorrichtung kann beispielsweise eine rechtwinklige Basisplatte, eine rechtwinklige Rückwand, sowie zwei dreieckförmige Seitenwände aufweisen, ohne die vorliegende Offenbarung darauf zu beschränken.

Die Basisplatte kann dabei eine Isofix-Vorrichtung enthalten, damit sie wie ein Kindersitz verwendet werden kann bzw. damit Kindersitze (bspw. Kinderbabyschalen, Buggysitze, Babywannen) dort befestigt werden können. Die dreieckförmigen Seitenwände können derart verwendet werden, dass an den schrägen, oberen Kanten ein Kindersitz befestigt werden kann.

In manchen Ausführungsbeispielen ist die Transportvorrichtung abnehmbar an dem Fahrwerk angebracht.

Beispielsweise, bei einem Einkauf mit einem Kleinkind verbleibt das Kind typischerweise in seinem Kindersitz, der in einen Einkaufswagen gestellt wird, oder das Kind wird von seinem Kindersitz aus in den Einkaufswagen versetzt. Möglicherweise muss das Kind dafür dann aufgeweckt werden, was typischerweise nicht wünschenswert ist.

In einem anderen Fall, wenn man zuerst einen Einkaufswagen von einer Einkaufswagensammelstelle abholt, muss das Kind möglicherweise unbeaufsichtigt bleiben oder muss getragen werden, was möglicherweise ebenfalls nicht wünschenswert ist.

Ein ähnliches Problem kann entstehen, wenn man vom Einkaufen zurück nach Hause kommt, weil es sich typischerweise als schwierig herausstellt, wenn die Einkäufe und das Kind in die (möglicherweise in einem oberen Stockwerk gelegene) Wohnung getragen werden müssen.

Deshalb ist es wünschenswert, wenn die Transportvorrichtung gleichzeitig als Kindersitz verwendet werden kann und gleichzeitig das Kind und die Einkäufe in dem Schubwagen transportiert werden können.

Nach einem Einkauf kann die Transportvorrichtung wieder von dem Fahrwerk gelöst und beides einzeln in einem Fahrzeug verstaut werden, bspw. kann die Transportvorrichtung dann wieder als Kindersitz im Fahrzeug verwendet werden.

In manchen Ausführungsbeispielen ist die Transportvorrichtung mit dem Fahrwerk gekoppelt.

Die Transportvorrichtung kann an dem Fahrwerk fixiert sein, sodass sie unbeweglich ist, oder sie kann drehbar gelagert sein.

In solchen Ausführungsbeispielen hat der Schubwagen ferner: wenigstens ein Gelenk, das die Transportvorrichtung mit dem Fahrwerk verbindet, sodass ein Kipp- und/oder Drehwinkel zwischen der Transportvorrichtung und dem Fahrwerk einstellbar ist.

Das Gelenk kann jede Art von Gelenk sein, bspw. ein Kugelgelenk oder zwei Achsgelenke, wenn sowohl der Kipp- als auch der Drehwinkel einstellbar sein sollen, oder ein Achsgelenk, um nur den Kippwinkel ändern zu können, bzw. ein Achsgelenk, um nur den Drehwinkel ändern zu können.

In manchen Ausführungsbeispielen ist der Kippwinkel bezüglich einer horizontalen Achse und der Drehwinkel bezüglich einer vertikalen Achse bestimmt, ohne die vorliegende Offenbarung darauf zu beschränken.

Eine Änderung des Drehwinkels entspricht in solchen Ausführungsbeispielen einer Rotation der Transportvorrichtung parallel zum Fahrwerk. Eine Änderung des Kippwinkels verändert dann den Winkel zwischen der Transportvorrichtung und dem Fahrwerk.

In manchen Ausführungsbeispielen ist wenigstens einer von Kipp- und Drehwinkel fixierbar.

So kann bei einem Aufsteigen von Treppen oder bei einem Verweilen auf Rolltreppen, eine Position der Transportvorrichtung eingestellt werden, die parallel zu den Treppenstufen ist, sodass der Inhalt der Transportvorrichtung vor einem Herausfallen geschützt ist.

Beispielsweise kann das Gelenk bzw. die Gelenke über eine Funktion verfügen, die es erlaubt, dass ein Winkel fest einstellbar ist, bspw. indem das Gelenk in einem beliebigen Winkel einrasten kann.

In manchen Ausführungsbeispielen weist der Schubwagen ferner auf: eine Schiebevorrichtung, die schwenkbar an der Transportvorrichtung und/oder an dem Fahrwerk angebracht ist.

Die Schiebevorrichtung kann eine oder mehrere Stangen umfassen, mit welchen der Schubwagen geschoben werden kann.

Ein Winkel der Schiebevorrichtung mit dem Fahrwerk und/oder der Transportvorrichtung kann darüber hinaus auch veränderbar sein. Bspw. kann die Schiebevorrichtung über die Transportvorrichtung eingeklappt werden, um eine Überrollbügelfunktion zu erfüllen. Die Schiebevorrichtung kann darüber hinaus in jedem beliebigen Winkel eingestellt werden, bspw. parallel zum Fahrwerk, sodass ein Schubwagen gemäß der vorliegenden Offenbarung auch als Anhänger gezogen werden kann.

Zurückkommend zur Fig. 1, veranschaulicht diese eine erste Ausführungsform eines Fahrwerks 1 für einen Schubwagen gemäß der vorliegenden Offenbarung.

Das Fahrwerk 1 weist eine Hinterachse 2 auf, die über einen elastischen Spannmechanismus 3 mit einer Vorderachse 4 verbunden ist. Sowohl an der Hinter- und an der Vorderachse 2 und 4 sind zudem Räder 5 (die in folgenden Figuren bezugszeichenlos bleiben) angebracht.

Die Vorderachse ist in eine Führung (nicht abgebildet) der Hinterachse eingelassen und über zwei Vorspannelemente 6 (hier: Federn) mit der Hinterachse gekoppelt.

Wird eine Zugspannung in dem elastischen Spannmechanismus 3 aufgebaut, d.h. wenn die Federn 6 gespannt werden, indem die Vorderachse 4 verstellt wird, wird ein Achsabstand zwischen der Hinterachse 2 und der Vorderachse 4 verkleinert. Gleichzeitig wirkt eine Spannkraft, die bei Nachlassen der Zugspannung den Achsabstand wieder vergrößert.

Fig. 2 stellt ein Fahrwerk 1' schematisch dar, in welchem eine alternative Führung 7 zwischen der Vorderachse 4 und der Hinterachse 2 vorgesehen ist. In der Führung 7 befinden sich Kugellager, welche ein Gleiten der Vorderachse ermöglichen.

In dem Fahrwerk 1' ist der gleiche elastische Spannmechanismus vorgesehen wie in dem Fahrwerk 1, hier jedoch der Einfachheit halber nicht abgebildet.

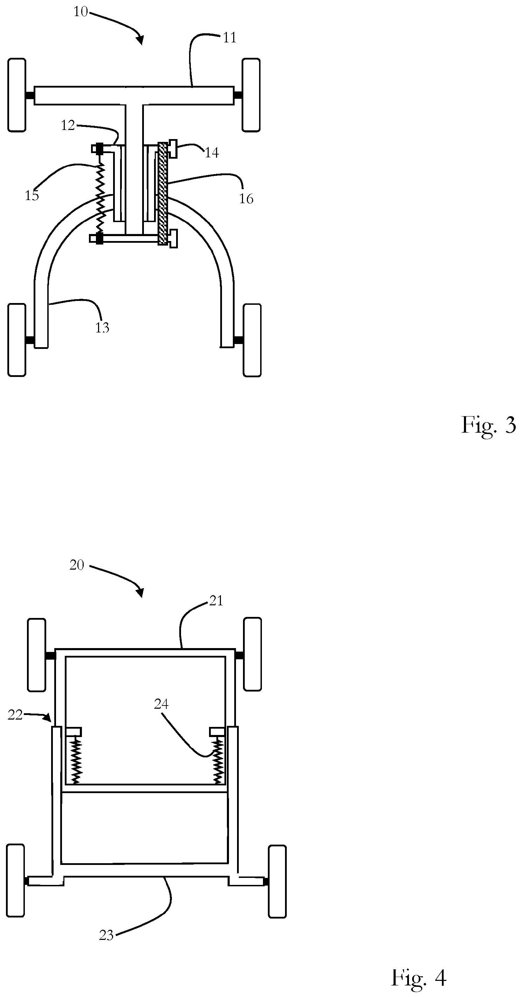

Fig. 3 veranschaulicht ein weiteres Ausführungsbeispiel eines Fahrwerks 10 gemäß der vorliegenden Offenbarung.

Hier liegt eine Vorderachse 11 in einer Führung 12 ein, wobei die Führung 12 fest mit einer Hinterachse 13 verbunden ist.

Die Führung ist in diesem Ausführungsbeispiel als Gleitschiene ausgebildet.

Sowohl die Vorderachse 11 als auch die Führung 12 weisen eine Befestigungsvorrichtung 14 auf, durch welche ein elastischer Spannmechanismus realisiert werden kann. In diesem Ausführungsbeispiel ist an einer Seite der Befestigungsvorrichtung eine Feder 15 gespannt, während an einer anderen Seite ein elastisches Band 16 gespannt ist.

Dies soll darüber hinaus darstellen, dass der elastische Spannmechanismus auf verschiedene Arten realisiert werden kann. In manchen Ausführungsbeispielen kann auf beiden Seiten eine Feder oder ein elastisches Band gespannt sein.

Fig. 4 zeigt ein weiteres Ausführungsbeispiel eines Fahrwerks 20 gemäß der vorliegenden Offenbarung.

Eine Vorderachse 21 befindet sich in einer Führung 22 einer Hinterachse 23. Als elastischer Spannmechanismus sind hier Federn 24 zwischen der Vorderachse und der Hinterachse gespannt.

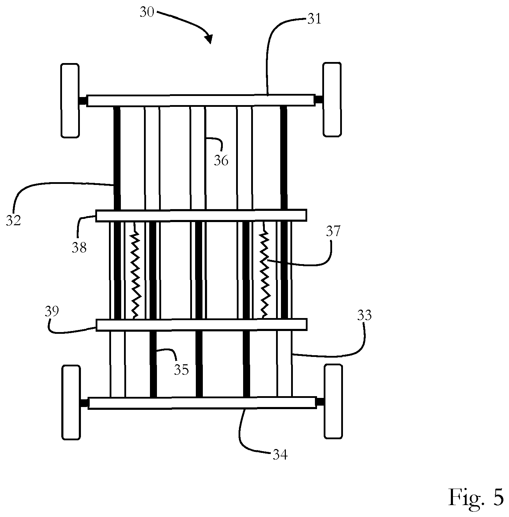

Fig. 5 zeigt ein weiteres Ausführungsbeispiel eines Fahrwerks 30 gemäß der vorliegenden Offenbarung.

Eine Vorderachse 31 weist zwei Längsstreben 32 auf, die in Rohre 33, die an einer Hinterachse 34 angebracht sind, greifen und in dieser beweglich gelagert sind. Umgekehrt weist die Hinterachse 34 Längsstreben 35 auf, die in Rohre 36, die an der Vorderachse 31 angebracht sind, greifen und in diesen beweglich gelagert sind. Auf diese Weise wird eine Führung bereitgestellt, die es erlaubt, die Vorderachse 31 und die Hinterachse 34 gleichermaßen zu verstellen, womit eine Zugspannung in einem elastischen Spannmechanismus aufgebaut werden kann.

Der elastische Spannmechanismus umfasst Vorspannelemente 37, die jeweils zwischen Querstreben 38 und 39 angebracht sind, wobei die Querstreben 38 und 39 jeweils über die Längsstreben 32 und 35 mit der Vorderachse 31 bzw. der Hinterachse 34 verbunden sind.

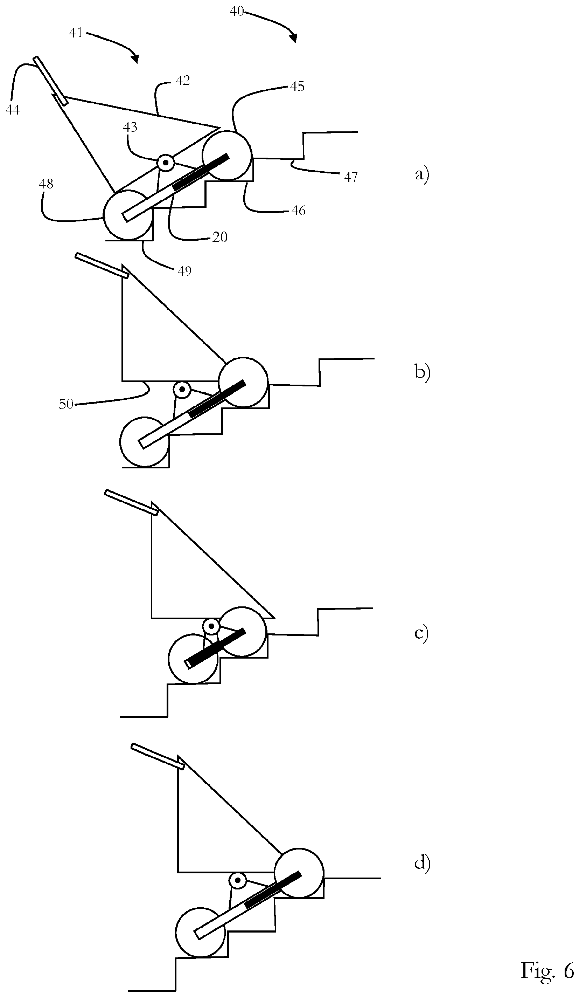

Fig. 6 zeigt beispielhaft, wie ein Schubwagen 41 gemäß der vorliegenden Offenbarung verwendet werden kann.

Der Schubwagen 41 weist in diesem Ausführungsbeispiel das Fahrwerk 20, welches in Zusammenhang mit Fig. 4 beschrieben wurde, auf, ohne die vorliegende Offenbarung darauf zu beschränken.

Des Weiteren weist der Schubwagen 41 eine Transportvorrichtung 42 auf, die über ein Gelenk 43 mit dem Fahrwerk gekoppelt ist, und an der eine Schiebevorrichtung 44 angebracht ist.

Fig. 6a) zeigt, wie der Schubwagen 41 mit einem Vorderrad 45 auf einer Treppenstufe 46 steht. Dabei steht das Vorderrad 45 an einer Stirnseite einer höheren Treppenstufe 47 und ein Hinterrad 48 steht auf einer niedrigeren Treppenstufe 49.

Die Transportvorrichtung 42 ist in diesem Ausführungsbeispiel vierzig Zentimeter breit und sechzig Zentimeter lang, damit zwei normierte Getränkekisten hintereinander Platz finden, ohne die vorliegende Offenbarung darauf zu beschränken.

Beispielsweise können auch Koffer zwischen den Seitenwänden der Transportvorrichtung 42 befestigt werden.

Des Weiteren sind die Wände der Transportvorrichtung 42 und die Schiebevorrichtung 44 einklappbar.

Die Schiebevorrichtung 44 ist schwenkbar an der Transportvorrichtung 42 befestigt, damit ein Schiebewinkel und eine Schiebehöhe eingestellt werden können. Außerdem kann, je nach eingestellter Höhe der Schiebevorrichtung 44 selbige als Überrollbügel dienen, wenn der Schubwagen 41 bspw. an ein Fahrrad als Anhänger angehängt wird.

Die Vorderräder 45 und Hinterräder 48 haben einen Raddurchmesser von zwanzig Zentimetern, ohne die vorliegende Offenbarung darauf zu beschränken, wobei die Vorderräder 48 in diesem Ausführungsbeispiel nicht schwenkbar angeordnet sind, damit der Schubwagen zum Aufsteigen einer Treppe genutzt werden kann. In manchen Ausführungsbeispielen sind die Vorderräder jedoch schwenkbar angebracht (also rotierbar um eine Achse senkrecht zum Boden), und in manchen Ausführungsbeispielen kann das Schwenken der Vorderräder zum Überwinden einer Treppe zusätzlich blockiert werden.

Fig. 6b) zeigt, dass sowohl die Transportvorrichtung 42 als auch die Schiebevorrichtung 44 gekippt werden können. Die Transportvorrichtung 42 kann generell auch gedreht werden, wie hierin beschrieben, dies ist jedoch hier nicht dargestellt. Die Transportvorrichtung 42 ist derart gekippt, dass ihre Grundfläche 50 parallel zu einer Oberfläche einer Treppenstufe verläuft.

Des Weiteren ist die Schiebevorrichtung 44 entgegen der Kipprichtung der Transportvorrichtung 42 gekippt.

Fig. 6c) zeigt, wie das Fahrwerk gemäß der vorliegenden Offenbarung verkleinert ist, indem das Vorderrad gegen die Stirnseite der Treppenstufe 47 gedrückt wurde, während das Hinterrad angehoben wurde, sodass der Achsabstand verkleinert ist und eine Zugspannung in dem elastischen Spannmechanismus 24 des Fahrwerks 20 aufgebaut wurde.

Fig 6d) zeigt schließlich den Zustand des Schubwagens 41, nachdem das Vorderrad über die Stirnseite der Treppenstufe 47 angehoben wurde, sodass die Zugspannung abgebaut wurde, und der Achsabstand sich wieder vergrößert hat. Hierfür ist zusätzlich eine Bremse vorgesehen (nicht dargestellt), die dazu eingerichtet ist, die Hinterräder zu blockieren, damit die Hinterräder fest positioniert sind, wenn die Vorderachse angehoben wird.

Insgesamt steht der Schubwagen 41 nun eine Stufe höher als in der Fig. 6a) und der Vorgang kann wiederholt werden, bis die Treppe überwunden ist.

Die vorliegende Offenbarung ist jedoch nicht auf die in den Zeichnungen beschriebenen Ausführungsbeispiele beschränkt. Beispielsweise kann ein Schubwagen gemäß der vorliegenden Offenbarung auch eine Sperrklinke aufweisen, die dazu eingerichtet ist, ein Zurückrollen des Schubwagens zu verhindern, wenn sie (bspw. durch Drücken oder Ziehen) aktiviert wird. So kann eine schwere Last mit dem Schubwagen eine Treppe hinauf transportiert werden, ohne dass der Wagen zurückrollt.

Die Sperrklinke kann mit der Hinterachse verbunden sein (in manchen Ausführungsbeispielen zusätzlich oder alternativ mit der Vorderachse), sodass ein Zurückrollen auf der Treppe verhindert werden kann, ein Schieben in Schubrichtung (bspw. die Treppe hinauf) jedoch möglich bleibt. Die Sperrklinke kann bspw. auf ebenem Grund deaktiviert werden, sodass auch ein Zug des Schubwagens möglich ist.

Erfindungsgemäße Ausführungsbeispiele betreffen ein Fahrwerk für einen Schubwagen, umfassend: eine Hinterachse und eine Vorderachse, die in Schubrichtung hintereinander angeordnet sind, wobei ein Achsabstand durch einen elastischen Spannmechanismus veränderbar ist, wobei der Achsabstand durch einen Aufbau einer mechanischen Spannung in dem elastischen Spannmechanismus durch Verstellen der Vorderachse und/oder der Hinterachse vergrößerbar ist.

In solchen erfindungsgemäßen Ausführungsbeispielen kann ein ähnlicher oder ein anderer elastischer Spannmechanismus verwendet werden als oben beschrieben. In solch einem elastischen Spannmechanismus kann die mechanische Spannung (bspw. Zugspannung oder Druckspannung) in die andere Richtung aufgebaut werden als in den oben beschriebenen nicht erfindungsgemäßen Ausführungsbeispielen, sodass mit einem solchen Fahrwerk ein Treppenabstieg erleichtert durchführbar sein kann.

Beispielsweise kann ein Schubwagen mit einem solchen Fahrwerk eine Treppe herunter geschoben oder gezogen werden. Jedoch kann es problematisch sein, den Schubwagen herunterzuschieben, wenn die Öffnung des Schubwagens (bspw. bei einem Kinderwagen) nach unten zeigt, sodass in solchen Fällen der Inhalt verloren gehen könnte (wobei, wie oben beschrieben, eine verstellbare Transportvorrichtung vorhanden sein kann, die so eingestellt werden kann, dass der Inhalt nicht verloren geht). Wenn der Schubwagen gezogen wird (also rückwärts eine Treppe heruntergezogen wird), kann man damit in den meisten Fällen sicherstellen, dass der Inhalt nicht herausfällt.

Zieht man also einen Schubwagen mit einem solchen Fahrwerk die Treppe herunter, kann die Vorderachse auf der oberen Treppenstufe abgestellt werden, während man den Achsabstand durch Aufbau der mechanischen Spannung vergrößert, indem man die Räder der Hinterachse auf eine niedrigere Treppenstufe setzt (wenigstens zwei Stufen Abstand zu der Stufe, auf der sich die Vorderachse befindet). Setzt man die Räder der Hinterachse auf der unteren Treppenstufe ab, lässt sich die Vorderachse anheben, sodass die mechanische Spannung abgebaut und damit der Achsabstand verkleinert wird, damit die Vorderachse auf einer niedrigeren Treppenstufe abgesetzt werden kann als zuvor.

In erfindungsgemäßen Ausführungsbeispielen ist also der elastische Spannmechanismus dazu eingerichtet, den Achsabstand durch Abbau der mechanischen Spannung zu verkleinern.

Der elastische Spannmechanismus kann beispielsweise ein elastisches Band umfassen, das fest am Schubwagen montiert ist, oder das manuell befestigt werden kann, wenn ein Treppenabstieg erforderlich ist.

Das elastische Band kann um die Vorderachse gewickelt sein oder anderweitig damit verbunden sein. Ferner kann es an einer anderen Stelle des Schubwagens befestigt sein, wie zum Beispiel an der Hinterachse, an einer Schiebevorrichtung (bspw. Griff), oder dergleichen.

In manchen Ausführungsbeispielen kann das elastische Band um den Griff des Schubwagens gewickelt sein, sodass die manuelle Montage oder Demontage erleichtert ist.

Das elastische Band kann ein Stoffband, ein Metallband, ein Federband, oder dergleichen umfassen. Der elastische Spannmechanismus kann jedoch auch alternativ oder zusätzlich ein Vorspannelement (bspw. eine mechanische Feder, eine hydraulische Feder, eine pneumatische Feder, einen Dämpfer, oder dergleichen) umfassen.

Manche Ausführungsbeispiele betreffen einen Schubwagen mit einem solchen Fahrwerk.

In manchen Ausführungsbeispiele enthält ein Fahrwerk für einen Schubwagen gemäß der vorliegenden Offenbarung einen oder beide Arten des elastischen Spannmechanismus, sodass sowohl ein Treppenaufstieg als auch ein Treppenabstieg erleichtert werden kann.

Mit anderen Worten betreffen manche Ausführungsbeispiele ein Fahrwerk für einen Schubwagen, umfassend: eine Hinterachse und eine Vorderachse, die in Schubrichtung hintereinander angeordnet sind; einen ersten elastischen Spannmechanismus, der dazu eingerichtet ist, einen Achsabstand zwischen der Hinterachse und der Vorderachse zu verändern, wobei der Achsabstand durch einen Aufbau einer Zugspannung in dem ersten elastischen Spannmechanismus durch Verstellen der Vorderachse und/oder der Hinterachse verkleinerbar ist; und einen zweiten elastischen Spannmechanismus, der dazu eingerichtet ist, einen Achsabstand zwischen der Hinterachse und der Vorderachse zu verändern, wobei der Achsabstand durch einen Aufbau einer mechanischen Spannung in dem zweiten elastischen Spannmechanismus durch Verstellen der Vorderachse und/oder der Hinterachse vergrößerbar ist.

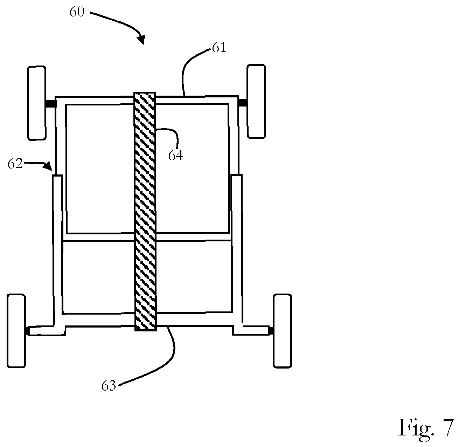

Fig. 7 zeigt ein Fahrwerk 60 für einen Schubwagen gemäß der vorliegenden Offenbarung, wobei ein Achsabstand durch einen Aufbau einer Zugspannung (als mechanische Spannung) in einem elastischen Spannmechanismus vergrößerbar ist und wobei der elastische Spannmechanismus dazu eingerichtet ist, den Achsabstand durch Abbau der Zugspannung zu verkleinern.

Das Fahrwerk 60 umfasst eine Vorderachse 61 und eine Hinterachse 63, wobei sich die Vorderachse 61 in einer Führung 62 der Hinterachse befindet. Ferner ist ein elastisches Band 64 um Vorderachse und Hinterachse gewickelt, sodass sich eine Zugspannung in dem elastischen Band 64 aufbaut, wenn der Achsabstand vergrößert wird, wie hierin beschrieben, sodass bspw. ein Treppenabstieg erleichtert wird.

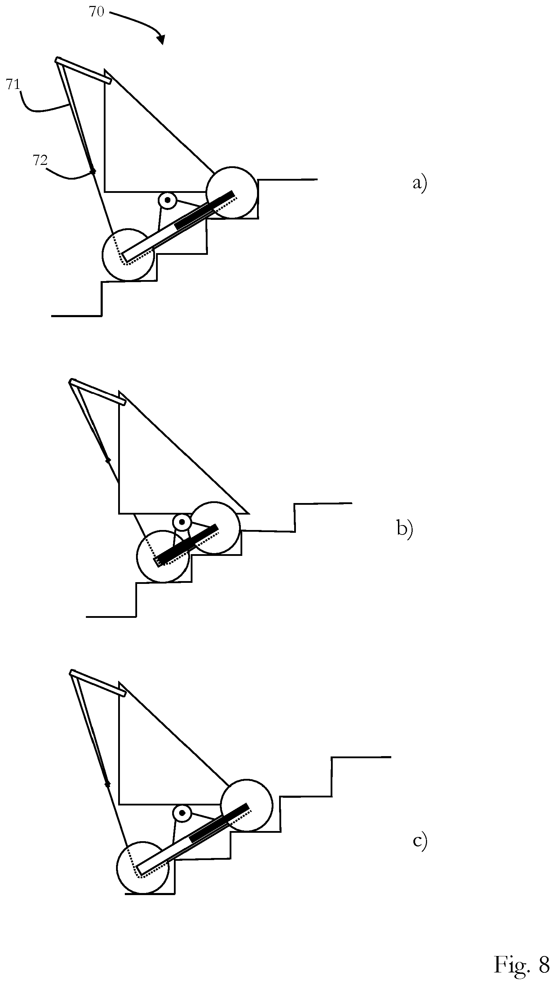

Fig. 8 zeigt einen Schubwagen 70 gemäß der vorliegenden Offenbarung, der ähnlich aufgebaut ist wie der Schubwagen 40 (beschrieben in Fig. 6), der jedoch nicht das Fahrwerk 20 enthält, sondern ein Fahrwerk, dessen Hinterachse und dessen Vorderachse ineinander verstellbar sind, und wobei ein Achsabstand durch einen elastischen Spannmechanismus veränderbar ist, wobei der Achsabstand durch einen Aufbau einer Zugspannung in dem elastischen Spannmechanismus durch Verstellen der Vorderachse und/oder der Hinterachse vergrößerbar ist.

Der elastische Spannmechanismus ist in diesem Ausführungsbeispiel ein elastisches Band 71, das an der Vorderachse befestigt ist, um die Hinterachse herum geleitet wird, und um den Griff des Schubwagens 70 gewickelt ist. Mit Hilfe einer Klemmschnalle 72 ist das elastische Band 71 an sich selbst befestigt, sodass es bis zu einem vorbestimmten Grad vorgespannt ist.

Zieht man den Schubwagen 70 eine Treppe herunter, wie oben beschrieben, wird die Zugspannung in dem elastischen Band 71 erhöht, wenn der Achsabstand ausgehend von einer Grundposition vergrößert wird, wie in Fig. 8a) dargestellt.

In Fig 8b) ist gezeigt, wie der Achsabstand durch Abbau der Zugspannung verkleinert wird, sodass das elastische Band wieder in dem vorbestimmten Grad gespannt ist.

Fig. 8c) zeigt, ähnlich zur Fig. 8a), wie der Schubwagen 70 eine weitere Stufe heruntergezogen werden kann, indem der Achsabstand wieder vergrößert wird.

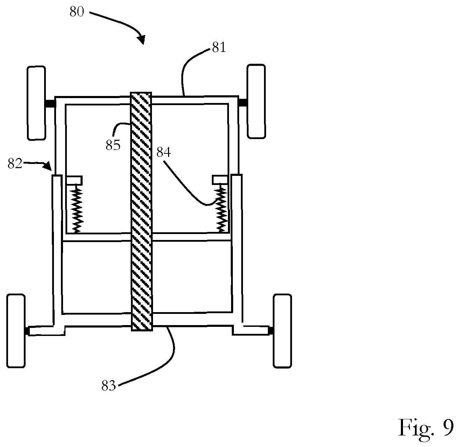

Fig. 9 zeigt ein weiteres Ausführungsbeispiel eines Fahrwerks 80 für einen Schubwagen gemäß der vorliegenden Offenbarung.

Das Fahrwerk 80 umfasst eine Vorderachse 81 und eine Hinterachse 83, wobei sich die Vorderachse 81 in einer Führung 82 der Hinterachse befindet.

Das Fahrwerk beinhaltet ferner einen ersten elastischen Spannmechanismus 84, der dazu eingerichtet ist, einen Achsabstand zwischen der Hinterachse 83 und der Vorderachse 81 zu verändern, wobei der Achsabstand durch einen Aufbau einer Zugspannung in dem ersten elastischen Spannmechanismus 84 durch Verstellen der Vorderachse 81 und/oder der Hinterachse verkleinerbar ist, sowie einen zweiten elastischen Spannmechanismus 85, der dazu eingerichtet ist, einen Achsabstand zwischen der Hinterachse 83 und der Vorderachse 81 zu verändern, wobei der Achsabstand durch einen Aufbau einer mechanischen Spannung (in diesem Ausführungsbeispiel eine Zugspannung) in dem zweiten elastischen Spannmechanismus 85 durch Verstellen der Vorderachse 81 und/oder der Hinterachse 83 vergrößerbar ist.

Der erste elastische Spannmechanismus 84 enthält dabei zwei Federn zwischen der Vorderachse 81 und der Hinterachse 83 und der zweite elastische Spannmechanismus 85 enthält ein elastisches Band, das um die Vorderachse 81 und die Hinterachse 83 gewickelt ist.

Solch ein Fahrwerk kann an einem Schubwagen gemäß der vorliegenden Offenbarung vorgesehen sein, sodass sowohl ein Treppenaufstieg und ein Treppenabstieg erleichtert ermöglicht wird.

### BEZUGSZEICHENLISTE

- 1; 1'; 10; 20; 30; 60; 80: Fahrwerk
- 2; 13; 23; 34, 63; 83: Hinterachse
- 3; 24: elastischer Spannmechanismus
- 4; 11; 21; 31; 61, 81: Vorderachse
- 5: Räder
- 6; 37: Vorspannelement
- 7; 12; 22; 62; 82: Führung
- 14: Befestigungsvorrichtung
- 15; 24; 84: Feder
- 16; 64; 71; 85: elastisches Band
- 32, 35: Längsstrebe
- 33, 36: Rohr
- 38, 39: Querstrebe
- 40: Verwendungsbeispiel eines Schubwagens
- 41; 70: Schubwagen
- 42: Transportvorrichtung
- 43: Gelenk
- 44: Schiebevorrichtung
- 45: Vorderrad
- 46, 47, 49: Treppenstufe
- 48: Hinterrad
- 50: Grundfläche der Transportvorrichtung
- 72: Klemmschnalle

## Patentansprüche

1. Fahrwerk für einen Schubwagen, umfassend:
eine Hinterachse (63; 83) und eine Vorderachse (61; 81), die in Schubrichtung hintereinander angeordnet sind, wobei
ein Achsabstand durch einen elastischen Spannmechanismus (64; 71; 84; 85) veränderbar ist, wobei der Achsabstand durch einen Aufbau einer mechanischen Spannung in dem elastischen Spannmechanismus (64; 71; 85) durch Verstellen der Vorderachse (61; 81) und/oder der Hinterachse (63; 83) vergrößerbar ist,
**dadurch gekennzeichnet, dass**
die Vorderachse (61; 81) mit der Hinterachse (63; 83) durch den elastischen Spannmechanismus verbunden ist.

2. Fahrwerk nach Anspruch 1, wobei der elastische Spannmechanismus (64; 71; 85) dazu eingerichtet ist, den Achsabstand durch Abbau der mechanischen Spannung zu verkleinern.

3. Schubwagen mit einem Fahrwerk (60; 80) nach einem der Ansprüche 1 oder 2.

4. Fahrwerk nach Anspruch 1, wobei der elastische Spannmechanismus (64; 71; 84; 85) einen ersten elastischen Spannmechanismus (84) und einen zweiten elastischen Spannmechanismus (85) umfasst, wobei
der erste elastische Spannmechanismus (84) dazu eingerichtet ist, den Achsabstand zwischen der Hinterachse (83) und der Vorderachse (81) zu verändern, wobei der Achsabstand durch einen Aufbau einer Zugspannung in dem ersten elastischen Spannmechanismus (84) durch Verstellen der Vorderachse (81) und/oder der Hinterachse (83) verkleinerbar ist; und wobei
der zweite elastische Spannmechanismus (85) dazu eingerichtet ist, den Achsabstand zwischen der Hinterachse (83) und der Vorderachse (81) zu verändern, wobei der Achsabstand durch den Aufbau der mechanischen Spannung in dem zweiten elastischen Spannmechanismus (85) durch Verstellen der Vorderachse (81) und/oder der Hinterachse (83) vergrößerbar ist.

5. Schubwagen mit einem Fahrwerk (80) nach Anspruch 4.

## Claims

1. Chassis for a pushcart, comprising:
a rear axle (63; 83) and a front axle (61; 81), which are arranged one behind the other in the pushing direction, wherein
a axle distance is variable by means of an resilient tensioning mechanism (64; 71; 84; 85),
wherein the axle distance is increasable by generating a mechanical tension in the resilient tensioning mechanism (64; 71; 85) through adjustment of the front axle (61; 81) and/or the rear axle (63; 83),
**characterized in that**
the front axle (61; 81) is connected to the rear axle (63; 83) by the resilient tensioning mechanism.

2. Chassis according to claim 1, wherein the resilient tension mechanism (64; 71; 85) is configured to reduce the distance between axles by releasing the mechanical tension.

3. Pushcart with a chassis (60; 80) according to one of claims 1 or 2.

4. Chassis according to claim 1, wherein the resilient tension mechanism (64; 71; 84; 85) comprises a first resilient tension mechanism (84) and a second resilient tension mechanism (85), wherein
the first resilient tension mechanism (84) is configured to vary the axle distance between the rear axle (83) and the front axle (81), wherein the axle distance is reducible by generating a tensile stress in the first resilient tension mechanism (84) by adjusting the front axle (81) and/or the rear axle (83); and wherein
the second resilient tension mechanism (85) is configured to vary the axle distance between the rear axle (83) and the front axle (81), wherein the axle distance is increasable by building up a mechanical tension in the second resilient tension mechanism (85) by adjusting the front axle (81) and/or the rear axle (83).

5. Pushcart with a chassis (80) according to claim 4.

## Revendications

1. Châssis pour un chariot à pousser, comprenant :
un essieu arrière (63 ; 83) et un essieu avant (61 ; 81), disposés l'un derrière l'autre dans la direction de poussée,
dans lequel
un empattement est réglable au moyen d'un mécanisme de tension élastique (64 ; 71 ; 84 ; 85),
l'empattement pouvant être augmentée par la génération d'une tension mécanique dans le mécanisme de tension élastique (64 ; 71 ; 85) par ajustement de l'essieu avant (61 ; 81) et/ou de l'essieu arrière (63 ; 83),
**caractérisé en ce que**
l'essieu avant (61 ; 81) est relié à l'essieu arrière (63 ; 83) par ledit mécanisme de tension élastique.

2. Châssis selon la revendication 1, dans lequel le mécanisme de tension élastique (64 ; 71 ; 85) est conçu pour réduire l'empattement par relâchement de la tension mécanique.

3. Chariot à pousser comprenant un châssis (60 ; 80) selon l'une quelconque des revendications 1 ou 2.

4. Châssis selon la revendication 1, dans lequel le mécanisme de tension élastique (64 ; 71 ; 84 ; 85) comprend un premier mécanisme de tension élastique (84) et un second mécanisme de tension élastique (85), dans lequel
le premier mécanisme de tension élastique (84) est conçu pour modifier l'empattement entre l'essieu arrière (83) et l'essieu avant (81), l'empattement pouvant être réduit par la génération d'une tension de traction dans ledit premier mécanisme de tension élastique (84) via l'ajustement de l'essieu avant (81) et/ou de l'essieu arrière (83) ; et
le second mécanisme de tension élastique (85) est conçu pour modifier l'empattement entre l'essieu arrière (83) et l'essieu avant (81), l'empattement pouvant être augmenté par la génération d'une tension mécanique dans ledit second mécanisme de tension élastique (85) via l'ajustement de l'essieu avant (81) et/ou de l'essieu arrière (83).

5. Chariot à pousser comprenant un châssis (80) selon la revendication 4.
